# EUROPÄISCHE PATENTSCHRIFT

(11) **EP 3 948 179 B1**
(45) Veröffentlichungstag und Bekanntmachung des Hinweises auf die Patenterteilung: **03.01.2024**
(21) Anmeldenummer: 20715813.0
(22) Anmeldetag: 27.03.2020
(51) Int. Cl.: B65D 88/26, G01S 13/86, G01S 13/87, G01F 13/00, G01F 23/28, G01F 23/284, G01F 23/292, G01F 23/296, G01S 13/88, G01S 15/88, G01F 22/00, B65D 88/54, B65G 69/04, B65G 69/10

(54) **HOMOGENISIERTER MATERIALEINTRAG FÜR EIN SILO**
HOMOGENISED MATERIAL CHARGE FOR A SILO
ENTRÉE DE MATIÈRE HOMOGÉNÉISÉE POUR UN SILO

(30) Priorität: 04.04.2019 DE 102019204833
(43) Veröffentlichungstag der Anmeldung: 09.02.2022
(73) Patentinhaber: thyssenkrupp Polysius GmbH, 59269 Beckum (DE); thyssenkrupp AG, 45143 Essen (DE)
(72) Erfinder: UNGETHÜM, Frank, 33604 Bielefeld (DE); RÜTHER, Thomas, 48317 Drensteinfurt (DE)
(74) Vertreter: thyssenkrupp Intellectual Property GmbH
(86) Internationale Anmeldenummer: PCT/EP2020/058692
(87) Internationale Veröffentlichungsnummer: WO 2020/201075

(56) Entgegenhaltungen:
- CN-A- 109 178 976
- DE-A1- 10 106 176
- DE-B4- 10 106 176
- FR-A3- 2 595 338
- JP-A- H07 181 073
- KR-B1- 101 611 795
- US-A- 3 576 262
- US-A- 4 272 028
- US-A- 4 399 846
- US-B1- 6 729 365

## Beschreibung

Die Erfindung betrifft ein Verfahren zum Auftragen von Schüttgut in ein Silo.

In einem Silo werden Schüttgüter gelagert, welche regelmäßig zur Verwendung in weiteren Schritten entnommen werden. Um in den weiteren Verfahrensschritten eine gleichmäßige Produktqualität sicher zu stellen, ist eine möglichst gleichmäßige Produktzuführung wünschenswert. Daher sind alle Prozesse, welche zu einer Einmischung von Schüttgüter in einem Silo führen, negativ für darauffolgende Prozessschritte.

Aus der DE 35 20 498 A1 ist eine Speichereinrichtung für Schüttgut mit einer Verteilersäule bekannt.

Aus der EP 1 897 829 A1 ist ein Verfahren zum Befüllen eines Großraumsilos ohne Toträume für die Luftströmung zur gleichmäßigen Verteilung bekannt.

Aus der DE 35 26 503 A1 ist ein Verfahren zum gleichmäßigen Beschicken eines Silos mit einer Mehrzahl an Aufgabestellen bekannt.

Aus der DE 7004062 U ist eine Vorrichtung zum gleichmäßigen Beschicken von Silos für runde und eckige Lagerräume bekannt.

Aus der US 4 399 846 A ist ein Mechanismus zu Verteilung von festen Partikeln bekannt.

Aus der KR 101 611 795 B1 ist ein Kohlesilo mit mehreren Füllstandesmesssensoren bekannt.

Aus der JP H07 181073 A ist eine Vorrichtung zur Erfassung der Partikeloberfläche in einem Silo bekannt.

Aus der US 6 729 365 B1 ist ein Verteilsystem für ein Silo bekannt.

Aus der DE 101 06 176 A1 ist ein ausrichtbarer Messkopf und eine den Messkopf verwendende Füllstandvorrichtung bekannt.

Es hat sich gezeigt, dass durch die Entnahme von Schüttgut am unteren Ende des Silos es zu Unebenheiten im Schüttgut kommt. Diese Unebenheiten führen dazu, dass es zu Rutschungen im Schüttgut kommt. Bei solchen Rutschungen verhalten sich unterschiedliche Materialien mit unterschiedlicher Korngröße unterschiedlich, sodass es zu einer Entmischung kommen kann.

Aufgabe der Erfindung ist es, eine Entmischung des Schüttgutes, beispielsweise durch Verrutschen, zu vermeiden oder wenigstens zu reduzieren.

Gelöst wird diese Aufgabe durch das Verfahren mit den in Anspruch 1 angegebenen Merkmalen, ein Silo mit den in Anspruch 8 angegebenen Merkmalen sowie durch die Verwendung eines Silos zur Durchführung des Verfahrens mit den in Anspruch 15 angegebenen Merkmalen. Vorteilhafte Weiterbildungen ergeben sich aus den Unteransprüchen, der nachfolgenden Beschreibung sowie den Zeichnungen.

Für das erfindungsgemäße Verfahren zum Betreiben eines Silos für ein Schüttgut wird ein Silo einer Schüttgutzuführung zur ortsaufgelösten Zuführung von Schüttgut ausgewählt.

Zunächst wird wobei die Oberfläche des Schüttgutes im Lagerbereich ortsaufgelöst erfasst. Hierdurch wird ein Höhenprofil erfasst. Aus dem Höhenprofil lassen sich leicht Bereiche identifizieren, bei welchen die Oberfläche gegenüber dem Mittelwert der Gesamtoberfläche ein höheres oder niedrigeres Niveau aufweist.

Es wird wenigstens ein erster Bereich der Oberfläche des Schüttguts identifiziert, wobei der erste Bereich der Oberfläche gegenüber dem Mittelwert der Gesamtoberfläche des Schüttgutes ein niedrigeres Niveau aufweist. Gibt es mehr als einen Bereich, dessen Oberfläche gegenüber dem Mittelwert der Gesamtoberfläche des Schüttgutes ein niedrigeres Niveau aufweist, so kann der erste Bereich ausgewählt werden aufgrund der Differenz zwischen der Höhe der Oberfläche im ersten Bereich und dem Mittelwert der Gesamtoberfläche. Alternativ oder zusätzlich kann die Fläche und/oder das sich aus Fläche und Höhenunterschied ergebende Volumen berücksichtigt werden. Alternativ oder zusätzlich kann die Steilheit (erste Ableitung der Oberfläche) berücksichtigt werden, da das Risiko für Verrutschungen umso höher ist, um so steiler die Oberfläche verläuft. Somit weist der erste Bereich eine erhöhte Gefährdung auf, dass Schüttgut beispielsweise durch Rutschung aus umliegenden Bereichen in diesem ersten Bereich gelangt und dadurch zu einer Entmischung des Schüttguts führt. Um dieses zu verhindern wird die Zuführung von Schüttgut in den ersten Bereich gerichtet.

In einer weiteren Ausführungsform der Erfindung wird jeweils nur ein erster Teilbereich der Oberfläche des Schüttgutes erfasst wird, während Schüttgut in einem zweiten Teilbereich eingebracht wird. Hierbei ist der erste Teilbereich vom zweiten Teilbereich verschieden. Hierdurch kann eine Störung der Erfassung der Oberfläche durch herabfallendes Schüttgut vermieden werden.

In einer weiteren Ausführungsform der Erfindung erfolgt die Einbringung von Schüttgut in einem zweiten Teilbereich, wobei der zweite Teilbereich rotiert wird. Hierbei kann zum einen die radiale Einbringung variiert werden, um beispielsweise mehr mittig oder mehr an der Außenseite Schüttgut einzubringen. Des Weiteren kann die Rotationsgeschwindigkeit variiert werden, um unterschiedliche Schüttgutmengen in unterschiedliche Bereiche einzubringen. Alternativ oder zusätzlich kann die eingebrachte Schüttgutmenge zeitlich variiert werden, sodass Bereiche, in welchem beispielsweise kein Schüttgut eingebracht werden soll, zwar überstrichen aber nicht mit Schüttgut aufgefüllt werden. Insbesondere wird umso mehr Schüttgut in einen Bereich eingebracht, je niedriger das Niveau dieses Bereiches im Vergleich zur gesamten Oberfläche des Schüttguts ist.

In einer weiteren Ausführungsform der Erfindung wird wenigstens während des Einbringens von Schüttgut und wenigstens zeitweise die Oberfläche des Schüttguts im Lagerbereich des Silos erfasst. Die Erfassung der Oberfläche kann beispielsweise kontinuierlich erfolgen. Da während des Einbringens von Schüttgut dieses von oben auf die Oberfläche fällt, ist regelmäßig mit einer Störung der Erfassung zu rechnen. Daher kann es vorteilhaft sein, die Oberfläche nicht kontinuierlich beziehungsweise wenigstens nicht kontinuierlich vollflächig zu erfassen. Beispielsweise kann nur ein Teil der Oberfläche erfasst werden, in welchem gerade kein Schüttgut eingebracht wird. Alternativ kann in Pausen der Einbringung eine Erfassung erfolgen. Weiter kann die Oberfläche mit verschiedenen Messmethoden erfasst werden, welche sich ergänzen, sodass nicht für jede einzelne Erfassungsmethode eine kontinuierliche Erfassung benötigt wird. Beispielsweise und bevorzugt erfolgt die Erfassung der Oberfläche des Schüttgutes optisch, akustisch und/oder mittels Radar.

In einer weiteren Ausführungsform der Erfindung wird wenigstens eine Materialeigenschaft des zugeführten Schüttgutes bestimmt. Die bestimmte Materialeigenschaft des zugeführten Schüttgutes wird zur Auswahl des Bereichs der Oberfläche des Schüttgutes, in welchen das Schüttgut eingebracht werden soll, berücksichtigt. Beispielsweise und insbesondere kann die Materialeigenschaft eine Temperatur sein. In diesem Fall werden heiße Materialien, welche zu einer Beschädigung der Außenwand führen könnten, eher in die Mitte des Silos eingebracht.

In einer weiteren Ausführungsform der Erfindung wird die erfasste Materialeigenschaft des zugeführten Schüttguts bestimmt und gespeichert. Da das zugeführte Material regelmäßig schwankende Eigenschaften aufweist, zum Beispiel Korngrößen, kann hierdurch über längere Sicht eine gleichmäßige Verteilung erreicht werden. In Bereiche, in welche zuletzt hauptsächlich Schüttgut mit kleiner Korngröße eingebracht wurde, wird bevorzugt Schüttgut mit größerer Korngröße nachgeführt und andersherum. Dieses führt zu einer homogeneren Mischung des Schüttguts was zum einen zu einer besseren Stabilität des Schüttguts im Silo und zum anderen zu einem homogeneren Produkt führt, welches aus dem Silo entnommen wird.

In einer weiteren alternativen Ausführungsform wird die erfasste Materialeigenschaft des zugeführten Schüttguts bestimmt und gespeichert. Die Information wird jedoch dazu genutzt, an bestimmten Stellen im Silo Material mit bestimmten Eigenschaften einzulagern. So kann beispielsweise an einer ersten Stelle eher Material mit einer großen Korngröße und an einer zweiten Stelle eher Material mit einer kleinen Korngröße abgelegt werden. Hierdurch ist es später gezielt möglich, verschiedene Korngrößen aus einem Silo zu entnehmen. Auf eine Trennung, zum Beispiel durch Trennwände, wird in dieser alternativen Ausführungsform verzichtet.

Diese alternativ Ausführungsform kann vorteilhaft sein, wenn beispielsweise der ankommende Materialstrom regelmäßig wiederkehrende Schwankungen einer Eigenschaft aufweist. Dann kann Material mit vorwiegend gleicher Eigenschaft auch bevorzugt an eine bestimmte Stelle des Silos eingelagert werden. Die auf diese Stelle des Silos zugreifenden Siloausläufe könnten dann gezielt Material mit anderen Eigenschaften austragen und verschiedenen Verbrauchern gezielt zuführen. Vorteilhaft kann dieses beispielshaft bei Klinkersilos sein, welchen meist mehrere Mahlanlagen nachgeschaltet sind, die vom Typ unterschiedlich sein können. Unterschiedliche Typen können mit mehr oder weniger feinem Material mehr oder weniger gut betrieben werden. Somit kann durch die gezielte Zuführung von Material mit den richtigen Eigenschaften zur entsprechenden Mahlanlage des passenden Typs sich dann ein Anlagenoptimierungspotential bezüglich Produktqualität und/oder Betriebskosten ergeben. Wenn es beispielsweise zu Sonderereignisse im Zutransport kommt, beispielsweise einen Ofenschuss mit sehr heißem Material oder ein An- oder Abfahrvorgang des Ofens, dann können diese Schwankungen beziehungswiese Veränderungen bestimmter Eigenschaften gezielt in bestimmte Bereiche des Silos eingefüllt werden.

In einer weiteren Ausführungsform der Erfindung wird wenigstens eine Materialeigenschaft des abgeführten Schüttgutes bestimmt wird, wobei die bestimmte Materialeigenschaft des abgeführten Schüttgutes zur Auswahl des Bereichs der Oberfläche des zugeführten Schüttgutes, in welchen das zugeführte Schüttgut eingebracht werden soll, berücksichtigt wird. Besonders bevorzugt wird sowohl eine Materialeigenschaft des zugeführten Schüttguts als auch eine Materialeigenschaft des abgeführten Schüttguts bestimmt. Hierbei handelt es sich beispielsweise und insbesondere um Korngröße und/oder Korngrößenverteilung. Wird durch die Entnahme festgestellt, dass in einem Bereich beispielsweise sich insbesondere Schüttgut mit einer kleinen Korngröße befindet, so kann in diesem Bereich Material mit einer größeren Korngröße verstärkt zugeführt werden, um zu einer homogeneren Durchmischung des Schüttguts im Silo zu gelangen.

In einem weiteren Aspekt betrifft die Erfindung ein Silo für ein Schüttgut. Das Silo weist einen Lagerbereich und wenigstens eine erste Entnahmevorrichtung auf. Die erste Entnahmevorrichtung ist am unteren Ende des Lagerbereichs angeordnet. Das Silo weist ferner eine Schüttgutzuführung auf. Die Schüttgutzuführung weist wenigstens eine erste Einbringvorrichtung auf, wobei die erste Einbringvorrichtung oberhalb des Lagerbereichs angeordnet ist. Die Schüttgutzuführung ist zur ortsaufgelösten Zuführung von Schüttgut ausgebildet.

Erfindungsgemäß weist das Silo wenigstens einen dritten Sensor auf, wobei der wenigstens eine dritte Sensor zur ortaufgelösten Erfassung der Oberfläche des Schüttguts im Lagerbereich ausgebildet ist. Bevorzugt erfasst der wenigstens eine dritte Sensor die Oberfläche mittels Schall, Radar und/oder optisch. Beispielsweise weist das Silo mehrere dritte Sensoren auf, wobei die dritten Sensoren unterschiedliche Messverfahren aufweisen. Beispielsweise wird ein dritter Radarsensor mit einem dritten optischen Sensor kombiniert, um sowohl eine Radarmessung der Oberfläche als auch eine optische Erfassung der Oberfläche zu ermöglichen.

In einer weiteren Ausführungsform der Erfindung weist die Schüttgutzuführung einen Kegel auf. Der Kegel ist zwischen der ersten Einbringvorrichtung und dem Lagerbereich angeordnet, wobei der Kegel eine nach oben weisende Kegelspitze aufweist. Der Kegel weist Öffnungen auf, wobei Schüttgut aus der ersten Einbringvorrichtung durch die Öffnungen in den Lagerbereich eingebracht werden kann.

Die Verwendung eines Kegels ist aus mehreren Gründen besonders vorteilhaft. Üblicherweise wird das Silo aus Beton gebaut. Auf diesen Betonbau wird eine Oberkonstruktion üblicherweise aus Stahl gesetzt, welche zum einen die Materialzufuhr sicherstellt und zum anderen das Silo nach oben als Dach abschließt. Ein solcher Kegel kann für die Vergleichmäßigung und ortsaufgelöste Zuführung von Schüttgut Ideal verwendet werden. Gleichzeitig ermöglicht diese Bauweise eine ideale Nachrüstbarkeit auch bei bereits bestehenden Silos.

In einer weiteren Ausführungsform der Erfindung weist jede Öffnung eine Verschlussvorrichtung auf, wobei die Verschlussvorrichtungen getrennt öffenbar und schließbar, insbesondere einzelnen oder gruppenweise öffenbar und schließbar, sind. Bevorzugt sind die Verschlussvorrichtung in Form von Schiebern ausgebildet. In dieser Ausführungsform wird das Schüttgut zentral auf die Kegelspitze aufgebracht, verteilt sich und gelangt durch die offenen Öffnungen in die Bereiche der Oberfläche, in welche Schüttgut zugeführt werden soll.

In einer weiteren Ausführungsform der Erfindung weist de Schüttgutzuführung die erste Einbringvorrichtung und eine Verteilvorrichtung auf, wobei Schüttgut aus der erste Einbringvorrichtung über die Verteilvorrichtung in einen örtlich begrenzten Bereich einbringbar ist. Bevorzugt ist die Verteilvorrichtung um die zentrale Achse des Silos rotierbar. Beispielsweise handelt es sich bei der Verteilvorrichtung um eine rotierende Schurre. Besonders bevorzugt ist die Schurre teleskopierbar ausgeführt. Hierdurch ist möglich, Schüttgut gezielt über einzelnen oder mehreren Öffnungen und damit gezielt in einem bestimmten Bereich einzubringen beziehungsweise Bereiche gezielt auszulassen. Bevorzugt weist die Schurre eine zweite Befestigung am oberen Rand des Silomantels auf. Hierdurch kann die Belastung der Schurre, gerade bei größerer Länge, welche bei größerem Durchmesser des Silos auftritt, verringert werden. Die zweite Befestigung ist bevorzugt in Form einer umlaufenden Rolle. Die Rolle kann sich auf einer Schiene oder einer Bahn auf dem Silomantel abstützen.

In einer weiteren Ausführungsform der Erfindung weist das Silo eine Materialzuführung zur ersten Einbringvorrichtung auf. Die Materialzuführung weist wenigstens einen ersten Sensor aufweist, wobei der erste Sensor zur Erfassung wenigstens einer Eigenschaft des zugeführten Schüttguts ausgebildet ist. Die Eigenschaft ist ausgewählt aus der Gruppe umfassend Temperatur, Korngröße, Korngrößenverteilung. Die Materialzuführung kann beispielsweise in Form eines Förderbandes oder eines Plattenbandes ausgeführt sein.

In einer weiteren Ausführungsform der Erfindung weist das Silo eine Materialabführung zur Abführung von Schüttgut von der ersten Entnahmevorrichtung auf. Die Materialabführung weist wenigstens einen zweiten Sensor auf. Der zweite Sensor ist zur Erfassung wenigstens eine Eigenschaft des abgeführten Schüttguts ausgebildet, wobei die Eigenschaft ausgewählt ist aus der Gruppe umfassend Korngröße, Korngröße Verteilung, Materialzusammensetzung. Die Materialabführung kann beispielsweise in Form eines Förderbandes oder eines Plattenbands ausgeführt sein.

In einer weiteren Ausführungsform der Erfindung weist das Silo wenigstens drei, bevorzugt wenigstens sieben, Entnahmevorrichtungen auf. Hierdurch ist zum einen eine schnellere Entnahme größerer Mengen an Schüttgut möglich. Zum anderen ist eine homogenere Entnahme von Schüttgut möglich, wenn ein Silo mit größerem Durchmesser verwendet wird.

In einer weiteren Ausführungsform der Erfindung weist das Silo einen Durchmesser von 20 m bis 80 m auf.

In einer weiteren Ausführungsform der Erfindung weist das Silo eine Höhe von 10 m bis 60 m auf.

Besonders bevorzugt weist das Silo einen runden Querschnitt auf.

In einem weiteren Aspekt betrifft die Erfindung die Verwendung eines erfindungsgemäßen Silos zur Durchführung des erfindungsgemäßen Verfahrens.

Nachfolgend ist das erfindungsgemäße Silo anhand zweier in den Zeichnungen dargestellten Ausführungsbeispielen näher erläutert.
Fig. 1 Ausführungsform mit Verteilvorrichtung
Fig. 2 Ausführungsform mit Verteilvorrichtung
Fig. 3 Ausführungsform mit Verschlussvorrichtungen

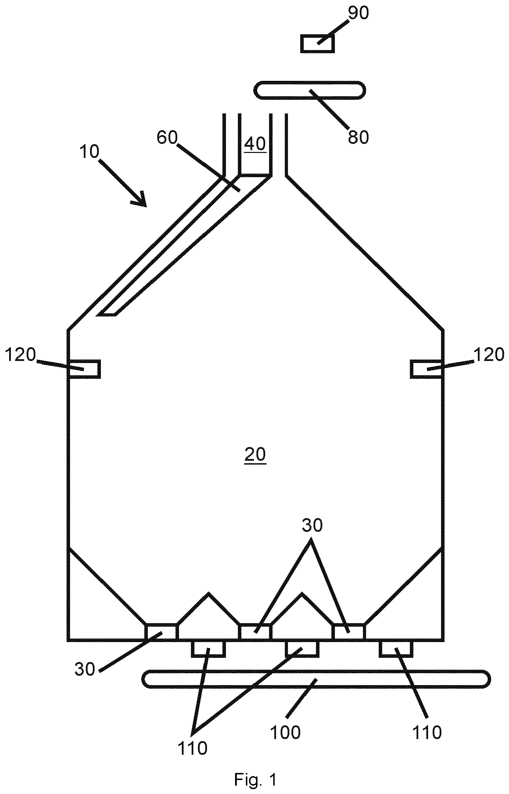

Fig. 1 zeigt ein Silo 10. In dem Silo 10 wird in einem Lagerbereich 20 ein Schüttgut gelagert. Dieses Schüttgut kann über die drei hier gezeigten Entnahmevorrichtungen 30 am unteren Ende des Lagerbereichs 20 entnommen werden. Nach der Entnahme kann das Schüttgut mittels der Materialabführung 100, im gezeigten Beispiel einem Förderband, abgeführt werden. Neues Schüttgut kann dem Silo 10 über eine Materialzuführung 80, im gezeigten Beispiel ein Förderband, und eine Einbringvorrichtung 40 zugeführt werden. Die Einbringvorrichtung 40 weist eine Verteilvorrichtung 60 auf, welche rotierbar um die zentrale Achse des Silos 10 angeordnet ist. Zusätzlich ist die Verteilvorrichtung 60 teleskopierbar ausgeführt, um verschiedene radiale Abstände mit Schüttgut erreichen zu können.

Um eine prozessuale Steuerung ermöglichen zu können weist das Silo 10 zwei dritte Sensoren 120 auf, welche die Oberfläche des Schüttguts erfassen. Zusätzlich weist das Silo 10 einen ersten Sensor 90 auf, welcher das Schüttgut auf der ersten Materialzuführung 80 erfasst und beispielsweise die Partikelgröße misst. Ebenso weist das Silo 10 drei zweite Sensoren 110 auf, welche das abtransportierte Schüttgut, beispielsweise die Partikelgröße des Schüttguts, messen.

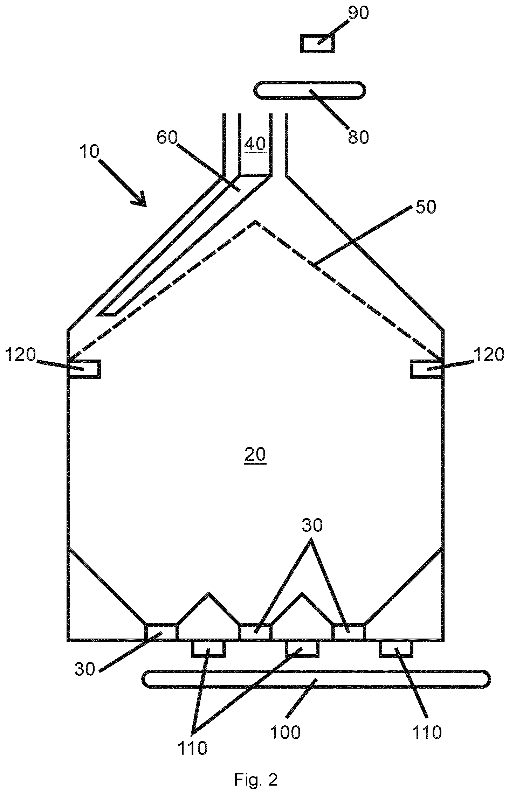

Das in Fig. 2 gezeigte Silo 10 entspricht dem in Fig. 1 gezeigtem Silo 10, jedoch mit einem Kegel 50. Um eine Verteilung des Schüttguts im Lagerbereich 20 zu erreichen, sodass die Oberfläche des Schüttguts möglichst eben ist, weist das Silo 10 einen Kegel 50 auf, wobei der Kegel 50 Öffnungen aufweist. Um diese Öffnungen gezielt ansteuern zu können, weist die Einbringvorrichtung 40 eine Verteilvorrichtung 60 auf, welche rotierbar um die zentrale Achse des Silos 10 angeordnet ist.

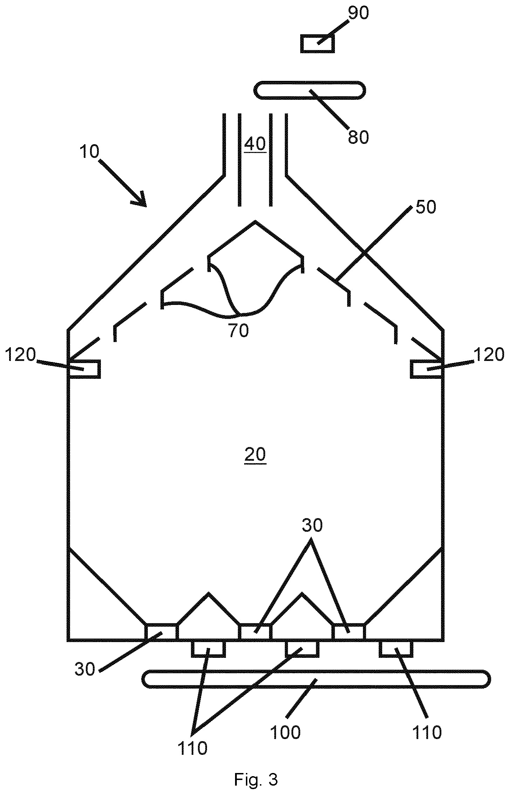

Fig. 3 zeigt eine zweite alternative Ausführungsform des Silos 10. Anstelle der Verteilvorrichtung 60 weist das Silo 10 Verschlussvorrichtungen 70 auf, welche die Öffnungen im Kegel öffnen und verschließen können. Die Zuführung von Schüttgut erfolgt zentral über die Einbringvorrichtung 40. Die zielgerichtete Verteilung des Schüttguts erfolgt über das Öffnen und Schließen der Öffnungen mittels der Verschlussvorrichtungen 70.

### Bezugszeichen

- 10: Silo
- 20: Lagerbereich
- 30: Entnahmevorrichtung
- 40: Einbringvorrichtung
- 50: Kegel
- 60: Verteilvorrichtung
- 70: Verschlussvorrichtung
- 80: Materialzuführung
- 90: erster Sensor
- 100: Materialabführung
- 110: zweiter Sensor
- 120: dritter Sensor

## Patentansprüche

1. Verfahren zum Betreiben eines Silos (10) für ein Schüttgut, wobei die Oberfläche des Schüttgutes im Lagerbereich (20) ortsaufgelöst erfasst wird, **dadurch gekennzeichnet, dass** ein Silo (10) mit einer Schüttgutzuführung zur ortsaufgelösten Zuführung von Schüttgut ausgewählt wird, wobei wenigstens ein erster Bereich der Oberfläche des Schüttguts identifiziert wird, wobei der erste Bereich der Oberfläche gegenüber dem Mittelwert der Gesamtoberfläche des Schüttgutes ein niedrigeres Niveau aufweist, wobei die Zuführung von Schüttgut durch eine Schüttgutzuführung zur ortsaufgelösten Zuführung in den ersten Bereich gerichtet wird.

2. Verfahren nach Anspruch 1, **dadurch gekennzeichnet, dass** jeweils nur ein erster Teilbereich der Oberfläche des Schüttgutes erfasst wird, wobei Schüttgut in einem zweiten Teilbereich eingebracht wird, wobei der erste Teilbereich vom zweiten Teilbereich verschieden ist.

3. Verfahren nach einem der vorstehenden Ansprüche, **dadurch gekennzeichnet, dass** die Einbringung von Schüttgut in einem zweiten Teilbereich erfolgt, wobei der zweite Teilbereich rotiert wird.

4. Verfahren nach einem der vorstehenden Ansprüche, **dadurch gekennzeichnet, dass** wenigstens während des Einbringens von Schüttgut wenigstens zeitweise die Oberfläche des Schüttguts im Lagerbereich (20) des Silos (10) erfasst wird.

5. Verfahren nach Anspruch 4, **dadurch gekennzeichnet, dass** die Oberfläche des Schüttguts optisch, akustisch und/oder mittels Radar erfasst wird.

6. Verfahren nach einem der vorstehenden Ansprüche, **dadurch gekennzeichnet, dass** wenigstens eine Materialeigenschaft des zugeführten Schüttgutes bestimmt wird, wobei die bestimmte Materialeigenschaft des zugeführten Schüttgutes zur Auswahl des Bereichs der Oberfläche des Schüttgutes, in welchen das Schüttgut eingebracht werden soll, berücksichtigt wird.

7. Verfahren nach einem der vorstehenden Ansprüche, **dadurch gekennzeichnet, dass** wenigstens eine Materialeigenschaft des abgeführten Schüttgutes bestimmt wird, wobei die bestimmte Materialeigenschaft des abgeführten Schüttgutes zur Auswahl des Bereichs der Oberfläche des zugeführten Schüttgutes, in welchen das zugeführte Schüttgut eingebracht werden soll, berücksichtigt wird.

8. Silo (10) für ein Schüttgut, wobei das Silo (10) einen Lagerbereich (20) aufweist, wobei das Silo (10) wenigstens eine erste Entnahmevorrichtung (30) aufweist, wobei die erste Entnahmevorrichtung (30) am unteren Ende des Lagerbereichs (20) angeordnet ist, wobei das Silo (10) eine Schüttgutzuführung aufweist, wobei die Schüttgutzuführung wenigstens eine erste Einbringvorrichtung (40) aufweist, wobei die erste Einbringvorrichtung (40) oberhalb des Lagerbereichs (20) angeordnet ist, wobei das Silo (10) wenigstens einen dritten Sensor (120) aufweist, wobei der wenigstens eine dritte Sensor (120) zur ortsaufgelösten Erfassung der Oberfläche des Schüttguts im Lagerbereich (20) ausgebildet ist, **dadurch gekennzeichnet, dass** die Schüttgutzuführung (40) zur ortaufgelösten Zuführung von Schüttgut ausgebildet ist.

9. Silo (10) nach Anspruch 8, **dadurch gekennzeichnet, dass** die Schüttgutzuführung einen Kegel (50) aufweist, wobei der Kegel zwischen der ersten Einbringvorrichtung (40) und dem Lagerbereich (20) angeordnet ist, wobei der Kegel (50) eine nach oben weisende Kegelspitze aufweist, wobei der Kegel (50) Öffnungen aufweist, wobei Schüttgut aus der ersten Einbringvorrichtung (40) durch die Öffnungen in den Lagerbereich (20) eingebracht werden kann.

10. Silo (10) nach einem der Ansprüche 8 bis 9, **dadurch gekennzeichnet, dass** die Schüttgutzuführung die erste Einbringvorrichtung (40) und eine Verteilvorrichtung (60) aufweist, wobei Schüttgut aus der erste Einbringvorrichtung (40) über die Verteilvorrichtung (60) in einen örtlich begrenzten Bereich einbringbar ist.

11. Silo (10) nach Anspruch 10, **dadurch gekennzeichnet, dass** die Verteilvorrichtung (60) um die zentrale Achse des Silos (10) rotierbar ist.

12. Silo (10) nach einem der Ansprüche 8 bis 11, **dadurch gekennzeichnet, dass** das Silo (10) eine Materialzuführung (80) zur ersten Einbringvorrichtung (40) aufweist, wobei die Materialzuführung (80) wenigstens einen ersten Sensor (90) aufweist, wobei der erste Sensor (90) zur Erfassung wenigstens einer Eigenschaft des zugeführten Schüttguts ausgebildet ist, wobei die Eigenschaft ausgewählt ist aus der Gruppe umfassend Temperatur, Korngröße, Korngrößenverteilung.

13. Silo (10) nach einem der Ansprüche 8 bis 12, **dadurch gekennzeichnet, dass** das Silo (10) eine Materialabführung (100) zur Abführung von Schüttgut von der ersten Entnahmevorrichtung (30) aufweist, wobei die Materialabführung (100) wenigstens einen zweiten Sensor (110) aufweist, wobei der zweite Sensor (110) zur Erfassung wenigstens ein Eigenschaft des abgeführt Schüttguts ausgebildet ist, wobei die Eigenschaft ausgewählt ist aus der Gruppe umfassend Korngröße, Korngröße Verteilung, Materialzusammensetzung.

14. Silo (10) nach einem der Ansprüche 8 bis 13, **dadurch gekennzeichnet, dass** der wenigstens eine dritte Sensor (120) die Oberfläche mittels Schall, Radar und/oder optisch erfasst.

15. Verwendung eines Silos (10) nach einem der Ansprüche 8 bis 14 zur Durchführung des Verfahrens nach einem der Ansprüche 1 bis 7.

## Claims

1. Method for operating a silo (10) for a bulk material, wherein the surface of the bulk material in the storage area (20) is detected in a spatially resolved manner, **characterised in that** a silo (10) with a bulk material feed is selected for the spatially resolved feed of bulk material, wherein at least a first region of the surface of the bulk material is identified, wherein the first region of the surface has a lower level than the mean value of the total surface of the bulk material, wherein the supply of bulk material is directed into the first region by a bulk material feed for spatially resolved supply.

2. Method according to claim 1, **characterised in that** in each case only a first partial area of the surface of the bulk material is detected, bulk material being introduced in a second partial area, the first partial area being different from the second partial area.

3. Method according to one of the preceding claims, **characterised in that** the introduction of bulk material takes place in a second sub-region, the second sub-region being rotated.

4. Method according to one of the preceding claims, **characterised in that** at least during the introduction of bulk material, the surface of the bulk material in the storage area (20) of the silo (10) is detected at least temporarily.

5. Method according to claim 4, **characterised in that** the surface of the bulk material is detected optically, acoustically and/or by means of radar.

6. Method according to one of the preceding claims, **characterised in that** at least one material property of the supplied bulk material is determined, the determined material property of the supplied bulk material being taken into account for selecting the region of the surface of the bulk material into which the bulk material is to be introduced.

7. Method according to one of the preceding claims, **characterised in that** at least one material property of the discharged bulk material is determined, the determined material property of the discharged bulk material being taken into account for selecting the region of the surface of the supplied bulk material into which the supplied bulk material is to be introduced.

8. Silo (10) for a bulk material, wherein the silo (10) has a storage region (20), wherein the silo (10) has at least one first removal device (30), wherein the first removal device (30) is arranged at the lower end of the storage region (20), wherein the silo (10) has a bulk material feed, wherein the bulk material feed has at least one first insertion device (40), wherein the first insertion device (40) is arranged above the storage region (20), wherein the silo (10) has at least one third sensor (120), wherein the at least one third sensor (120) is designed for spatially resolved detection of the surface of the bulk material in the storage region (20), **characterised in that** the bulk material feed (40) is designed for spatially resolved feeding of bulk material.

9. Silo (10) according to claim 8, **characterised in that** the bulk material feed has a cone (50), wherein the cone is arranged between the first insertion device (40) and the storage region (20), wherein the cone (50) has an upwardly pointing cone tip, wherein the cone (50) has openings, wherein bulk material from the first insertion device (40) can be introduced into the storage region (20) through the openings.

10. Silo (10) according to one of claims 8 to 9, **characterised in that** the bulk material feed comprises the first introduction device (40) and a distribution device (60), wherein bulk material can be introduced from the first introduction device (40) via the distribution device (60) into a locally limited area.

11. Silo (10) according to claim 10, **characterised in that** the distribution device (60) is rotatable about the central axis of the silo (10).

12. Silo (10) according to one of claims 8 to 11, **characterised in that** the silo (10) has a material feed (80) to the first insertion device (40), wherein the material feed (80) has at least one first sensor (90), wherein the first sensor (90) is designed to detect at least one property of the supplied bulk material, wherein the property is selected from the group comprising temperature, grain size, grain size distribution.

13. Silo (10) according to one of claims 8 to 12, **characterised in that** the silo (10) has a material discharge (100) for discharging bulk material from the first removal device (30), wherein the material discharge (100) has at least one second sensor (110), wherein the second sensor (110) is designed to detect at least one property of the discharged bulk material, wherein the property is selected from the group comprising grain size, grain size distribution, material composition.

14. Silo (10) according to one of claims 8 to 13 , **characterised in that** the at least one third sensor (120) detects the surface by means of sound, radar and/or optically.

15. Use of a silo (10) according to any one of claims 8 to 14 for carrying out the method according to any one of claims 1 to 7.

## Revendications

1. Procédé d'exploitation d'un silo (10) pour un matériau en vrac, dans lequel la surface du matériau en vrac dans la zone de stockage (20) est détectée de manière résolue dans l'espace, **caractérisé par le fait qu'**un silo (10) avec une alimentation en matériau en vrac est sélectionné pour l'alimentation résolue dans l'espace du matériau en vrac, dans lequel au moins une première région de la surface du matériau en vrac est identifiée, dans lequel la première région de la surface présente un niveau inférieur à la valeur moyenne de la surface totale du matériau en vrac, dans lequel l'alimentation en matériau en vrac est dirigée vers la première région par une alimentation en matériau en vrac pour l'alimentation résolue dans l'espace.

2. Procédé selon la revendication 1, **caractérisé par le fait que**, dans chaque cas, seule une première zone partielle de la surface du matériau en vrac est détectée, le matériau en vrac étant introduit dans une deuxième zone partielle, la première zone partielle étant différente de la deuxième zone partielle.

3. Procédé selon l'une des revendications précédentes, **caractérisé par le fait que** l'introduction de la matière en vrac a lieu dans une deuxième sous-région, la deuxième sous-région étant en rotation.

4. Procédé selon l'une des revendications précédentes, **caractérisé par le fait qu'au moins** pendant l'introduction du produit en vrac, la surface du produit en vrac dans la zone de stockage (20) du silo (10) est détectée au moins temporairement.

5. Méthode selon la revendication 4, **caractérisée par le fait que la** surface du matériau en vrac est détectée optiquement, acoustiquement et/ou au moyen d'un radar.

6. Procédé selon l'une des revendications précédentes, **caractérisé par la** détermination d'au moins une propriété matérielle du matériau en vrac fourni, la propriété matérielle déterminée du matériau en vrac fourni étant prise en compte pour sélectionner la région de la surface du matériau en vrac dans laquelle le matériau en vrac doit être introduit.

7. Procédé selon l'une des revendications précédentes, **caractérisé par le fait que** au moins une propriété matérielle du matériau en vrac déchargé est déterminée, la propriété matérielle déterminée du matériau en vrac déchargé étant prise en compte pour sélectionner la région de la surface du matériau en vrac fourni dans laquelle le matériau en vrac fourni doit être introduit.

8. Silo (10) pour un matériau en vrac, dans lequel le silo (10) a une zone de stockage (20), dans lequel le silo (10) a au moins un premier dispositif de retrait (30), dans lequel le premier dispositif de retrait (30) est disposé à l'extrémité inférieure de la zone de stockage (20), dans lequel le silo (10) a une alimentation en matériau en vrac, dans lequel l'alimentation en matériau en vrac a au moins un premier dispositif d'insertion (40), dans lequel le premier dispositif d'insertion (40) est disposé au-dessus de la zone de stockage (20), dans lequel le silo (10) possède au moins un troisième capteur (120), dans lequel au moins un troisième capteur (120) est conçu pour la détection résolue dans l'espace de la surface du matériau en vrac dans la zone de stockage (20), **caractérisé par le fait que** l'alimentation en matériau en vrac (40) est conçue pour l'alimentation résolue dans l'espace du matériau en vrac.

9. Silo (10) selon la revendication 8, **caractérisé en ce que** l'alimentation en matériau en vrac comporte un cône (50), le cône étant disposé entre le premier dispositif d'insertion (40) et la zone de stockage (20), le cône (50) ayant une pointe orientée vers le haut, le cône (50) comportant des ouvertures, le matériau en vrac provenant du premier dispositif d'insertion (40) pouvant être introduit dans la zone de stockage (20) à travers les ouvertures.

10. Silo (10) selon l'une des revendications 8 à 9, **caractérisé par le fait que** l'alimentation en matières en vrac comprend le premier dispositif d'introduction (40) et un dispositif de distribution (60), dans lequel les matières en vrac peuvent être introduites à partir du premier dispositif d'introduction (40) via le dispositif de distribution (60) dans une zone limitée localement.

11. Silo (10) selon la revendication 10, **caractérisé par le fait que** le dispositif de distribution (60) est rotatif autour de l'axe central du silo (10).

12. Silo (10) selon l'une des revendications 8 à 11, **caractérisé par le fait que** le silo (10) a une alimentation en matériau (80) vers le premier dispositif d'insertion (40), dans lequel l'alimentation en matériau (80) a au moins un premier capteur (90), dans lequel le premier capteur (90) est conçu pour détecter au moins une propriété du matériau en vrac fourni, dans lequel la propriété est choisie dans le groupe comprenant la température, la taille des grains, la distribution de la taille des grains.

13. Silo (10) selon l'une des revendications 8 à 12, **caractérisé en ce que** le silo (10) a une décharge de matériau (100) pour décharger le matériau en vrac du premier dispositif de retrait (30), dans lequel la décharge de matériau (100) a au moins un deuxième capteur (110), dans lequel le deuxième capteur (110) est conçu pour détecter au moins une propriété du matériau en vrac déchargé, dans lequel la propriété est sélectionnée dans le groupe comprenant la taille des grains, la distribution de la taille des grains, la composition du matériau.

14. Silo (10) selon l'une des revendications 8 à 13 , **caractérisé par le fait que** le au moins un troisième capteur (120) détecte la surface au moyen d'un son, d'un radar et/ou d'une optique.

15. Utilisation d'un silo (10) selon l'une quelconque des revendications 8 à 14 pour la mise en oeuvre du procédé selon l'une quelconque des revendications 1 à 7.
